Europäisches Patentamt

European Patent Office

Office européen des brevets

(19)

(11) Numéro de publication: **0 309 341 B1**

## FASCICULE DE BREVET EUROPEEN

(12)

(45) Date de publication de fascicule du brevet: **02.02.94**  (51) Int. Cl.⁵: **H04M 7/14**, H04M 1/02

(21) Numéro de dépôt: **88402375.5**

(22) Date de dépôt: **21.09.88**

(54) **Terminal de communication visuelle et sonore, notamment visiophone, à boîtier articulé.**

(30) Priorité: **25.09.87 FR 8713318**

(43) Date de publication de la demande:
**29.03.89 Bulletin 89/13**

(45) Mention de la délivrance du brevet:
**02.02.94 Bulletin 94/05**

(84) Etats contractants désignés:
**DE FR GB IT NL**

(56) Documents cités:
**FR-A- 2 036 675**
**US-A- 3 116 365**
**US-A- 4 258 387**

**TELCOM REPORT, vol. 6, no. 2, avril 1983, pages 69-77, Passau, DE; P. KLEIN et al.: "BIGFON-Endgeräte und ihre Leistungsmerk- male"**

(73) Titulaire: **FRANCE TELECOM**
**6, Place d'Alleray**
**F-75015 Paris(FR)**

(72) Inventeur: **FRANCE TELECOM**
**6, Place d'Alleray**
**F-75015 Paris(FR)**

(74) Mandataire: **Martin, Jean-Jacques et al**
**Cabinet REGIMBEAU**
**26, Avenue Kléber**
**F-75116 Paris (FR)**

## Description

La présente invention a trait au domaine des télécommunications, et concerne plus particulièrement un terminal de communication visuelle et sonore, tel qu'un visiophone, permettant à un interlocuteur de communiquer, par l'intermédiaire d'un réseau, avec un interlocuteur distant équipé d'un terminal analogue par le son et également par l'image.

Un tel terminal comprend de façon conventionnelle une caméra munie d'une optique, un moniteur à écran, un ensemble électronique de commande, de codage/décodage et d'interfaçage avec une ligne de transmission, et des moyens de contrôle manuel et/ou automatique.

L'ensemble des équipements ci-dessus est logé dans un boîtier ou coffret destiné le plus souvent à reposer sur une table devant laquelle l'interlocuteur est assis, et est associé à un poste téléphonique.

Pour obtenir une image satisfaisante de l'interlocuteur, il est nécessaire que la prise de vue s'effectue à une hauteur substantielle au-dessus de la table, typiquement de 20 à 30 cm.

C'est pourquoi, les boîtiers de visiophones connus présentent une face avant de hauteur importante dans la partie supérieure de laquelle est implantée l'optique; pour que les yeux de l'interlocuteur regardent dans une direction suffisamment proche de l'optique, le moniteur doit également être implanté dans la partie supérieure de ladite face avant.

Il en résulte qu'un tel terminal est couramment assez massif et encombre la table sur laquelle il est posé.

Un autre inconvénient d'un terminal connu réside dans le fait que le boîtier du terminal et l'optique de la caméra sont fixes. Il en résulte que le cadrage choisi pour l'optique est un cadrage moyen qui est censé convenir pour des personnes de statures très diverses. Ceci est également un inconvénient en ce que des personnes de taille très petite ou très grande risquent de voir leur visage mal cadré dans le champ de la caméra, ou encore une partie de leur visage être situé hors-champ.

On connaît déjà dans la technique antérieure, par le brevet américain n° US-A-4 258 387, un terminal de type visiophone qui comporte un boîtier constitué de deux parties articulées l'une à l'autre. Le boîtier peut prendre une position fermée pour son transport, et une position ouverte dans laquelle les deux parties forment un angle d'environ 90°. Il est en outre prévu, lorsque l'on souhaite modifier le cadrage, de monter la caméra sur la partie ouvrable du boîtier de telle sorte qu'on puisse varier son orientation par rapport à cette partie.

La présente invention vise à pallier ces inconvénients de la technique antérieure et à proposer un terminal de ce type dans lequel le champ de prise de vue de la caméra puisse être très facilement adapté à la stature de l'interlocuteur, avec à chaque fois un cadrage optimal de ce dernier, sans qu'il soit nécessaire de prévoir des moyens de montage spéciaux pour la caméra.

Un autre objet de l'invention est de proposer un terminal dont les moyens de contrôle manuel soient d'une très bonne accessibilité.

A cet effet, l'invention concerne un terminal de communication visuelle et sonore, du type associé notamment à un poste téléphonique et comprenant, dans un boîtier, un moniteur à écran de visualisation, une caméra munie d'une optique, un ensemble électronique de commande, de codage/décodage et d'interfaçage avec une ligne de transmission, et des moyens de contrôle, et dans lequel le boîtier comprend une première partie par laquelle le terminal repose sur une surface de support et une seconde partie, articulée sur la première partie autour d'un axe essentiellement horizontal, qui reçoit la caméra et son optique ainsi que le moniteur, terminal caractérisé en ce que, en utilisation, la seconde partie du boîtier est susceptible de prendre au moins deux positions angulaires différentes par rapport à la première partie, qui correspondent à deux directions de visée différentes de la caméra.

D'autres aspects et avantages de la présente invention apparaîtront mieux à la lecture de la description détaillée suivante de modes de réalisation préférées de celle-ci, donnée à titre d'exemple non limitatif et faite en référence aux dessins annexés, sur lesquels :

- la figure 1a est une vue en perspective d'ensemble, dans une première position, d'un terminal conforme à l'invention ;
- la figure 1b est une vue en perspective d'ensemble du terminal de la figure 1a dans une seconde position;
- la figure 2 est une vue de côté schématique, en coupe partielle, du terminal des figures 1a et 1b dans sa position de la figure 1b;
- les figures 3a et 3b sont des vues d'ensemble, de profil, de deux positions d'utilisation du terminal adaptées à deux statures respectives d'interlocuteurs;
- la figure 4 est une vue de dessus schématique d'une partie du terminal dans une position d'utilisation, illustrant en particulier la position désaxée de l'utilisateur par rapport à l'optique de la caméra;
- la figure 5 est une vue de dessus schématique de l'optique de la caméra, permettant de compenser les effets de cette position désaxée;

- la figure 6 est une vue de côté schématique de l'optique de la figure 5; et
- la figure 7 est une vue analogue à la figure 2 illustrant un aménagement complémentaire de la présente invention.

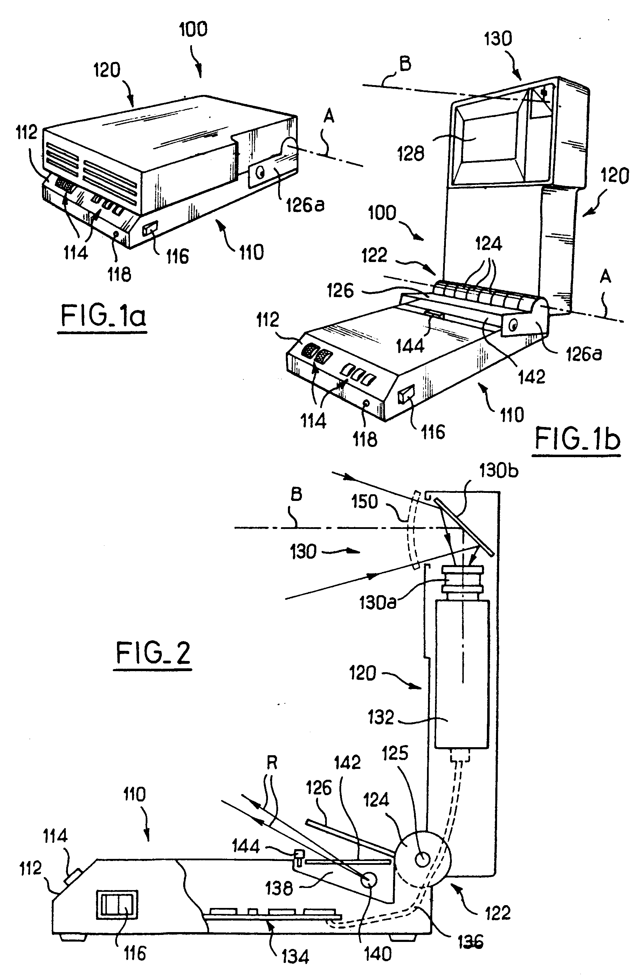

En référence tout d'abord aux figures 1a et 1b, un terminal de communication visuelle et sonore, du type visiophone, conforme à la présente invention comprend un boîtier, globalement désigné par la référence 100 et constitué par deux parties 110 et 120, de formes et de dimensions semblables articulées l'une par rapport à l'autre autour d'un axe horizontal A.

La première partie 110 du boîtier, de forme sensiblement parallélépipédique,présente à son extrémité avant une face biseautée 112 sur laquelle sont implantés un ensemble de boutons de manoeuvre 114. Un interrupteur de mise en fonctionnement 116 et un témoin lumineux de fonctionnement 118 sont en outre prévus dans la région antérieure.

Comme on peut l'observer, la partie 110 du boîtier est celle par laquelle il repose sur une surface telle qu'une table.

A l'extrémité arrière de la partie 110 est prévue une liaison articulée autour de l'axe A, globalement indiquée en 122, avec la partie 120, qui est ainsi rendue mobile entre une position fermée (figure 1a), dans laquelle ladite partie 120 est appliquée contre la face supérieure plane de la partie 110, et l'une parmi un ensemble de positions ouvertes (figure 1b), dans laquelle elle s'étend sensiblement vers le haut par rapport à la partie 110.

Dans le présent exemple, et de façon non limitative, la liaison articulée 122 est constituée par un ensemble de paliers extérieurement cylindriques 124, alternativement solidaires de la partie 110 et de la partie 120 du boîtier, et pouvant tourner autour d'un axe commun 125 (figure 2).

Autour de cet axe est en outre monté pivotant, par l'intermédiaire de deux plaques verticales extrêmes 126a, un volet obturateur 126 pour des moyens d'éclairage auxiliaires, comme on le verra en détail plus loin.

Comme le montre la figure 1b, la partie mobile 120 du boîtier comporte dans sa région supérieure un moniteur de visualisation, dont l'écran est indiqué en 128, ainsi que l'optique 130 d'une caméra vidéo, ayant une direction de visée (axe B) donnée.

Dans le présent exemple de réalisation, la liaison articulée 122 est du type à frottement doux. De cette manière, la partie mobile 120 du boîtier peut prendre toute position angulaire souhaitée par rapport à la partie fixe 110, au moins dans une gamme angulaire excédant un angle d'ouverture prédéterminé.

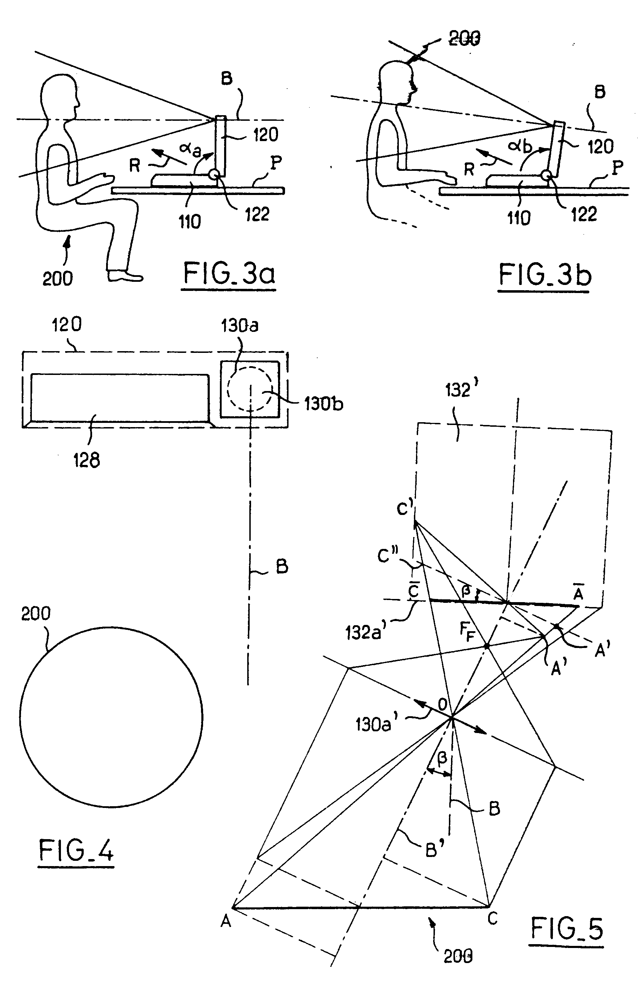

Comme le montrent les figures 3a et 3b, cette articulation à frottement doux permettant de faire varier l'inclinaison de l'écran et de la caméra par rapport à l'horizontale constitue le premier avantage de l'invention. Il est possible en effet de faire ainsi varier la direction de visée de la caméra en fonction notamment de la stature ou de la posture de l'interlocuteur.

Ainsi la figure 3a illustre schématiquement le cas où l'interlocuteur 200 est de relativement petite taille. Pour effectuer un cadrage correct de celui-ci, la partie mobile 120 du terminal occupe une position qui définit avec la partie fixe 110 un angle d'ouverture $\alpha_a$d'environ 90°.

Lorsqu'un interlocuteur plus grand doit utiliser le terminal, il repousse simplement la partie 120 pour que l'angle d'ouverture augmente, ce qui a pour effet de relever la direction de visée B (angle $\alpha_b$ sur la figure 3b), le frottement doux ayant pour effet de maintenir ladite partie 120 dans toute position souhaitée.

Sur la figure 3b, l'angle $\alpha_b$ vaut environ 100°.

Ainsi, l'adaptation du terminal à des cadrages différents s'effectue de façon simple et efficace, selon la hauteur de la partie à cadrer au-dessus du plan P sur laquelle le terminal repose.

Bien entendu, les parties 110 et 120 du boîtier du terminal peuvent prendre toute autre forme souhaitée sans sortir du cadre de l'invention.

En outre, bien que l'on ait décrit ci-dessus le cas où le terminal repose sur une table à laquelle l'interlocuteur est assis, il est bien entendu que la présente invention couvre un terminal de type à accrochage mural, la partie fixe étant fixée verticalement le long d'un mur.

Dans ce cas, l'articulation avec la partie mobile peut être prévue soit dans la région supérieure de la partie fixe, auquel cas un accroissement de l'ouverture relève la direction de visée de la caméra, soit encore dans la région inférieure de la partie fixe, auquel cas un accroissement de l'ouverture abaisse la direction de visée.

En outre, dans la configuration des figures 1a et 1b, on peut prévoir une ouverture de la partie mobile 120 jusqu'à 180° par rapport à la partie fixe. Ceci est avantageux par exemple lorsque le visiophone est posé sur le sol, le visage de l'interlocuteur pouvant être pratiquement à l'aplomb de l'optique de la caméra, et plus pargénéralement dans tous les cas où le visage de l'interlocuteur se place en surplomb du terminal.

Par ailleurs, il est bien entendu que l'invention couvre également le cas où les deux parties du terminal sont articulées à l'avant, la caméra et l'écran étant cette fois-ci prévus sur la face supérieure de la partie mobile. Dans ce cas, même en position repliée et dans des positions de faible inclinaison des deux parties du boîtier, la caméra et l'écran sont exposés et le terminal peut donc être utilisé.

Sur la figure 2 est représentée plus en détail l'organisation interne du terminal des figures 1a et 1b.

La caméra est indiquée en 132 et est de préférence du type à senseur solide (type "Charge coupled device"), qui présente avantageusement des dimensions réduites.

La caméra 132 est disposée à plat dans la partie 120 du boîtier , c'est-à-dire essentiellement perpendiculairement à la direction de visée B, et l'optique comprend un objectif 130a et un miroir de renvoi 130b orienté à environ 45° par rapport à la direction de visée B. On peut noter que l'inversion de l'image provoquée par la réflexion sur le miroir 130b est aisément corrigée électroniquement, par inversion des balayages au niveau du senseur de la caméra. En outre, il est également possible d'utiliser des moyens de renvoi d'angle autres qu'un miroir, et par exemple un prisme ou des fibres optiques.

On peut noter que la disposition à plat de la caméra 132 permet avantageusement de réduire considérablement l'épaisseur de la partie 120 du terminal.

On peut observer encore sur la figure 2 que la partie fixe 110 du boîtier abrite toute la partie électronique du terminal, schématiquement indiquée en 134.

Un faisceau de câbles 136 relie le moniteur 128 et la caméra 132 à l'ensemble électronique 134, en passant à travers deux paliers adjacents 122, de configuration creuse, solidaires respectivement des parties 110 et 120.

Un dispositif d'éclairement d'appoint, comme indiqué plus haut, est prévu à l'arrière de la partie fixe 110 du boîtier (à droite sur la figure 2) et comprend, dans une cavité de section essentiellement triangulaire 138 formée dans la face supérieure de ladite partie 110, une source lumineuse par exemple tubulaire 140 d'axe parallèle à l'axe A , reçue dans la cavité 138, une plaque translucide horizontale 142 fermant la cavité à sa partie supérieure et formant diffuseur des rayons émis par la source , ainsi que le volet précité 126.

En outre, un gradateur à curseur linéaire 144, par exemple de type variateur électronique, (figures 1b et 2), longeant le bord antérieur de la plaque 142, permet de régler l'intensité lumineuse de la lampe 140.

Un tel dispositif d'éclairage d'appoint a pour objet de compenser les défauts d'éclairement du visage de l'interlocuteur, soumis le plus souvent à un éclairement plongeant (soleil, plafonnier, etc...)

Il est utilisé avantageusement en lumière artificielle, de très faible intensité par rapport à la lumière du jour, pour éclairer le sujet par le bas (rayons lumineux R sur les figures 2, 3a et 3b) en complément de l'éclairage plongeant, en atténuant ainsi les zones d'ombre sur le sujet, notamment sur son visage, et en donnant ainsi au niveau de la caméra une image moins contrastée, plus satisfaisante notamment lorsque les moyens vidéo utilisés (écran et caméra) sont à base résolution.

Le volet réglable 126, articulé avec frottement doux sur l'axe 125 et qui peut ainsi prendre toute position souhaitée, permet également de moduler l'éclairage d'appoint en fonction des conditions d'éclairage ambiant.

Ainsi, la présente invention propose un terminal visuel de type visiophone qui présente l'avantage suivant lequel la visée est réglable de façon simple en fonction du sujet qui utilise le terminal.

Il est à noter que la phase finale du mouvement de fermeture du boîtier provoque la fermeture simultanée du volet 126 des moyens d'éclairage d'appoint.

Un autre avantage de la présente invention réside en ce que, dans la position ouverte du terminal, l'ensemble écran/caméra est à une distance substantielle du sujet, typiquement de l'ordre de 40 à 80 cm, et en même temps les divers boutons de contrôle manuel (par exemple réglage de la luminance et de la chrominance de l'écran, etc.), situés à l'avant de la partie fixe horizontale 110, restent facilement accessibles à l'utilisateur.

On va décrire ci-dessous un certain nombre de variantes de réalisation de la présente invention.

En référence maintenant à la figure 4, on peut observer que, du fait que l'écran 128 et l'optique 130 de la caméra sont disposés côte-à-côte, le sujet a le plus souvent tendance à être situé en face de l'écran, et donc désaxé par rapport à l'optique 130.

Cette position désaxée, du fait que l'objectif de la caméra a généralement une focale très courte, de l'ordre de 8 à 10 mm, serait, avec un objectif dirigé selon B comme représenté sur la figure 4, très nettement perceptible et gênante par cause d'une déformation des lignes verticales visualisées, par effet de parallaxe.

Des moyens pour compenser ce défaut d'alignement et pour effectuer la correction de parallaxe requise, conformément à un autre aspect de la présente invention, consistent à donner à l'optique et au plan de l'élément photosensible de la caméra des orientations judicieusement choisies, comme on va le voir ci-dessous.

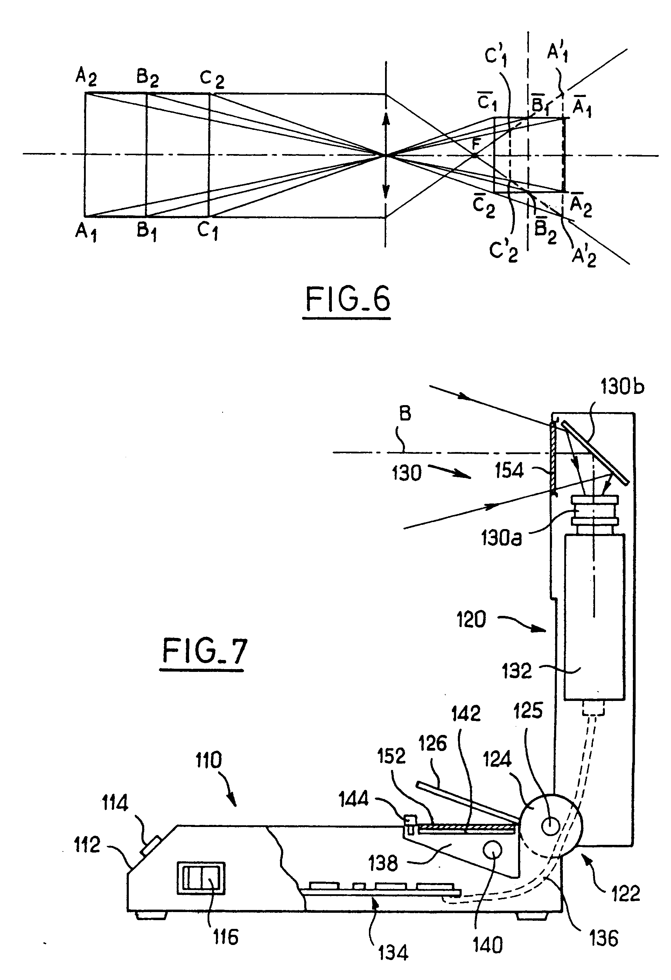

Sur les figures 5 et 6, on a schématisé la situation de la figure 4, en omettant le miroir réfléchissant 130b et en représentant la position de la caméra virtuelle 132′ et de l'objectif virtuel 130a′ créés par ce miroir, ce qui ne modifie en rien le raisonnement qui va être effectué.

Selon l'invention, l'axe B′ de l'objectif, schématisé par la lentille 130a′, est dirigé de biais, avec un angle $\beta$ choisi en fonction notamment de la largeur de l'écran 128 et de la distance du sujet 200 à ce dernier.

La face du sujet 200 et l'arrière-plan visualisé sont schématisés par le rectangle vertical A1A2C2C1 (droite AC sur la figure 5), parallèle à l'écran 128 et donc en biais par rapport à l'objectif. Son image se forme en A'C'(fig.5) et $A'_1$ $A'_2$ $C'_2$ $C'_1$ (fig.6), et on peut observer que, par la cause du défaut d'alignement précité, elle est fortement trapézoïdale. Si le plan sensible de la caméra était parallèle à l'objectif 130a', alors l'image du rectangle $A_1A_2C_2C_1$ (droite A''C'' sur la figure 5) serait également trapézoïdale.

Conformément à l'invention, on fait pivoter le plan sensible 132a' autour d'un axe vertical contenu dans ledit plan et croisant l'axe de l'objectif, de telle sorte que le plan sensible (plan image réel) soit maintenant essentiellement parallèle à l'objet dont l'image est à restituer (rectangle précité), c'est-à-dire essentiellement parallèle à l'écran 128 ou à la face avant du terminal.

L'image du rectangle objet devient donc $\overline{A_1}\overline{A_2}\overline{C_2}\overline{C_1}$ (figure 5) et $\overline{AC}$ (figure 5) et est donc également un rectangle , comme le montrent les tracés géométriques des figures 5 et 6.

On compense ainsi d'une manière simple et peu onéreuse l'erreur de visée,due au fait que la caméra effectue les prises de vue de l'utilisateur de biais,en inclinant l'objectif pour que sa nouvelle direction de visée B' soit dirigée selon le biais précité, le plan sensible virtuel de la caméra restant essentiellement parallèle à l'écran.

Comme on l'a indiqué plus haut, une caractéristique tique essentielle de l'invention réside en ce que la visée de la caméra peut être adaptée, par pivotement de la partie mobile 120 du terminal, à la stature ou à la position de l'interlocuteur dans le sens de la hauteur.

Selon l'invention, des moyens sont prévus pour aider l'interlocuteur à orienter correctement la partie mobile du terminal en fonction de sa position ou de sa stature, et pour lui permettre ainsi d'exercer un auto-contrôle permanent du cadrage.

Selon un premier aspect de l'invention, ces moyens comprennent, en référence à nouveau à la figure 2, un miroir semi-réfléchissant 150 (représenté en traits pointillés) mis en place devant l'optique de la caméra. Ce miroir est de préférence sphérique et convexe, afin de donner à l'utilisateur une image relativement large par les rayons qu'il réfléchit, les autres rayons étant captés normalement par la caméra pour conduire à la formation de l'image à transmettre.

De préférence, un ou plusieurs repères, par exemple gravés dans le verre à la surface extérieure du miroir, permettent à l'interlocuteur de déplacer la partie mobile 120 du terminal jusqu'à ce que l'image d'une partie de son corps, par exemple de sa tête, vienne prendre une position déterminée par rapport audit repère.

Par exemple, le repère peut être un cercle dans lequel, par déplacement de la partie mobile 120, l'utilisateur vient centrer l'image de sa tête.

On peut prévoir alternativement un miroir à réflexion totale disposé au voisinage de l'optique de la caméra.

Dans une variante de réalisation de l'invention, les moyens d'assistance au positionnement sont constitués par le moniteur lui-même. Plus précisément, si l'on utilise pour celui-ci un écran à cône d'observation réduit, l'utilisateur peut effectuer le positionnement correct de la partie articulée 120 en déplaçant celle-ci jusqu'à ce que l'image présente sur ledit écran soit de qualité optimale.

Par exemple, il peut s'agir d'un écran à cristaux liquides.

On peut rappeler qu'un écran à cristaux liquides à cône d'observation réduit se caractérise par une formation nettement dégradée de l'image lorsque la direction d'observation réelle présente un écart excessif par rapport à une direction d'observation privilégiée perpendiculaire au plan de la couche de cristaux liquides. Plus précisément, dès que les rayons lumineux émis par l'écran sont excessivement inclinés par rapport à ce même plan, alors l'effet de changement de polarisation de la lumière par excitation/désexcitation des cristaux ne permet pas d'obtenir, à la sortie de l'analyseur, un contraste satisfaisant.

Ainsi, un inconvénient bien connu de certains écrans à cristaux liquides est ici transformé en avantage en permettant un alignement aisé du terminal sur l'interlocuteur.

Une autre solution pour l'écran à cône d'observation réduit peut consister en un écran à tube cathodique ordinaire équipé à sa surface de micro-persiennes ou analogues ne laissant sortir les rayons lumineux que dans le cône d'observation souhaité. On prévoira par exemple un réseau de micro-persiennes horizontales et verticales entrelacées.

Selon un autre aspect encore de la présente invention, et maintenant en référence à la figure 7, il est prévu des moyens pour éviter que l'éclairage d'appoint décrit plus haut n'occasionne dans l'image obtenue des reflets indésirables, par exemple sur les verres d'une paire de lunettes portée par l'interlocuteur.

Ces moyens comprennent de façon préférée un polariseur 152 qui, dans le présent exemple, est disposé au-dessus du verre translucide 142 des moyens d'éclairage d'appoint et parallèlement à celui-ci, ainsi qu'un polariseur analyseur 154 disposé devant l'optique 130 de la caméra. La polarisation peut être de type linéaire ou circulaire. On élimine ainsi les réflexions spéculaires sur les verres précités, et donc les reflets indésirables. Par ailleurs, l'effet de réflexion partielle qui peut exister sur un tel analyseur 154 peut permettre à celui-ci de jouer le rôle du miroir semi-réfléchissant 150 décrit plus haut pour établir le cadrage correct entre le sujet et la caméra.

En outre, un certain nombre de variantes peuvent être envisagées quant aux divers aménagements de l'invention tels que décrits en détail ci-dessus.

Tout d'abord, le maintien de la partie mobile 120 du terminal dans l'une parmi plusieurs inclinaisons possibles en position ouverte peut être effectué par tout moyen autre que le frottement doux, et notamment par tout mécanisme à crans d'arrêt et ressort ou analogue définissant un ensemble déterminé de positions d'immobilisation possibles.

Une autre solution peut faire appel à un franchissement de point dur entre deux positions d'utilisation stables ou davantage.

En outre, le pivotement mutuel des deux parties du boîtier du terminal peut être effectué avec un moteur électrique, auquel cas des touches de commande bidirectionnelle peuvent être prévues sur la partie fixe du boîtier.

Selon une autre variante de l'invention, l'ensemble électronique du terminal peut être reçu dans la partie mobile 120 de celui-ci, qui sera alors bien plus volumineuse que la partie fixe 110, servant simplement de support du terminal.

En outre, il est particulièrement avantageux que la mise en marche du terminal s'effectue automatiquement à l'ouverture de ce dernier, et que la mise en sommeil s'effectue inversement à la fermeture. Des moyens pratiques pour ce faire peuvent comprendre un micro-interrupteur de type fugitif porté par la partie fixe 110 et soumis à l'action d'un doigt ou analogue solidaire de la partie mobile 120.

Selon une autre variante de l'invention, les moyens d'éclairage d'appoint peuvent être commandés non pas manuellement comme on l'a décrit plus haut, mais automatiquement en réponse à un signal de luminosité. Ce signal de luminosité peut soit provenir d'un capteur de type photodiode ou photorésistance prévu au voisinage de l'optique de la caméra, soit être créé, par un processeur approprié, à partir des signaux de sortie de la caméra 132, de telle sorte que la luminosité de l'interlocuteur et notamment de son visage soit satisfaisante pour l'obtention d'une image correcte.

D'autre part, l'éclairage d'appoint pourra comprendre tout aménagement optique approprié, et notamment réflecteur, lentilles, prismes,... pour obtenir un faisceau de concentration déterminée dirigé vers le sujet.

Une réalisation pratique d'un terminal de l'invention à usage domestique peut présenter les caractéristiques ci-dessous :
- largeur du boîtier : 12 à 15 cm;
- longueur du boîtier : 25 à 30 cm;
- épaisseur du boîtier fermé : 7 à 10 cm;
- hauteur du boîtier ouvert : 25 à 30 cm;
- ouverture maximale de la partie mobile : 110°;
- caméra couleur à senseur solide, avec résolution de l'ordre de 150 x 250 et focale de l'ordre de 8 à 12 mm;
- écran couleur à tube cathodique plat, de résolution égale ou supérieure.

Enfin, on peut noter que le terminal conforme à l'invention pourra être utilisé soit en association avec un poste téléphonique de type classique, avec une interconnexion appropriée, soit en intégrant un tel poste téléphonique. De préférence, la fonction dite "mains libres" sera disponible, afin d'obtenir une communication par l'image et le son de l'interlocuteur sans combiné téléphonique.

Bien entendu, l'invention n'est pas limitée aux formes de réalisations et variantes décrites ci-dessus et illustrées sur les dessins, mais l'homme de l'art saura y apporter toute variante ou modification conforme à son esprit.

**Revendications**

1.  Terminal de communication visuelle et sonore, du type associé notamment à un poste téléphonique et comprenant, dans un boîtier (100), un moniteur à écran de visualisation(128), une caméra (132) munie d'une optique (130), un ensemble électronique (134) de commande, de codage/décodage et d'interfaçage avec une ligne de transmission, et des moyens de contrôle (114), et dans lequel le boîtier(100) comprend une première partie (110) par laquelle le terminal repose sur une surface de support et une seconde partie (120), articulée sur la première partie autour d'un axe essentiellement horizontal (A), qui reçoit la caméra (132) et son optique (130) ainsi que le moniteur (128), terminal caractérisé en ce que, en utilisation, la seconde partie (120) du boîtier est susceptible de prendre au moins deux positions angulaires différentes par rapport à la première partie (110), qui correspondent à deux directions de visée différentes (B) de la caméra.

2.  Terminal selon la revendication 1, caractérisé en ce que les deux parties (110, 120) du boîtier sont en forme générale de parallélépipèdes plats et sont articulées l'une à l'autre le long de leurs petits bords.

3. Terminal selon la revendication 2, caractérisé en ce que les deux parties (110,120) du boîtier sont articulées l'une à l'autre par une liaison pivotante (122) comprenant des paliers successifs (124) alternativement solidaires desdites deux parties et pouvant tourner autour d'un axe commun (125).

4. Terminal selon la revendication 3, caractérisé en ce que la liaison pivotante (122) est à frottement doux et permet de placer le terminal dans une infinité de positions angulaires d'utilisation incluses dans un intervalle prédéterminé.

5. Terminal selon l'une des revendications 2 à 4, caractérisé en ce que l'écran (128) et l'optique (130) de la caméra sont disposés côte-à-côte dans la région de la partie mobile située à l'opposé de ladite articulation (122).

6. Terminal selon la revendidation 5, caractérisé en ce que la caméra (132) est disposée à plat dans ladite partie mobile (120), son optique (130) comprenant des moyens (130b) de renvoi à environ 90°.

7. Terminal selon l'une des revendications 2 à 6, caractérisé en ce que des organes de commande manuelle (114) sont prévus dans la région de la partie fixe (110) située à l'opposé de ladite articulation.

8. Terminal selon l'une des revendications 1 à 7, caractérisé en ce qu'il comprend en outre, dans la partie fixe (110) du boîtier et au voisinage de l'articulation (122), des moyens d'éclairage d'appoint (140) ayant une direction générale d'éclairement montante.

9. Terminal selon la revendication 8, caractérisé en ce que les moyens d'éclairage d'appoint comprennent un volet (126) articulé sur ledit axe (A) d'articulation des deux parties du boîtier.

10. Terminal selon l'une des revendications 8 et 9, caractérisé en ce qu'il comprend en outre un polariseur (152) disposé à la sortie des moyens d'éclairage d'appoint et un analyseur (154) disposé à l'entrée de l'optique (130) de la caméra.

11. Terminal selon l'une des revendications 1 à 10, dans lequel, en position d'utilisation, l'optique (130) de la caméra (132) est décalée latéralement par rapport à l'écran de visualisation (128), caractérisé en ce qu'il comprend en outre des moyens de correction de parallaxe.

12. Terminal selon la revendication 11, caractérisé en ce que les moyens de correction de parallaxe comprennent un objectif (130a) de la caméra (130), disposé de telle sorte que la direction de visée (B') de la caméra soit inclinée latéralement d'un angle ($\beta$) déterminé, le plan sensible (132a) de ladite caméra étant incliné approximativement du même angle ($\beta$) par rapport au plan perpendiculaire à ladite direction de visée (B').

13. Terminal selon l'une des revendications 1 à 12, caractérisé en ce qu'il comprend en outre des moyens d'assistance au positionnement de la partie mobile (120) du boîtier dans la position angulaire d'utilisation appropriée.

14. Terminal selon la revendication 13, caractérisé en ce que les moyens d'assistance au positionnement comprennent un miroir (150) disposé à l'entrée ou au voisinage de l'optique (130) de la caméra (132).

15. Terminal selon la revendication 13, caractérisé en ce que les moyens d'assistance au positionnement sont constitués par l'écran (128), qui est un écran à cône d'observation réduit.

16. Terminal selon la revendication 1, caractérisé en ce qu'il comprend un moteur d'entraînement de la partie mobile par rapport à la partie fixe du boîtier.

**Claims**

1. A terminal for sound and vision communications, of the type associated, in particular, with a telephone set, and comprising a case (100) containing: a display screen monitor (128); a camera (132) provided with optics (130); an electronic assembly (134) for control, coding/decoding, and telephone line interfacing purposes; and control means (114); and in which the case (100) comprises a first part (110) via which the terminal is supported on a support surface, and a second part (120) which is hinged to the first part about a substantially horizontal axis (A) and which receives the camera (132) and its optics (130) together with the monitor (128); said terminal being characterized in that, in use, the second part (120) of the case is capable of taking up at least two different angular positions relative to the first part (110) corresponding to two different aiming directions (B) for the camera.

**2.** A terminal according to claim 1, characterized in that the two parts (110, 120) of the case are generally in the form of flat rectangular boxes and are hinged to each other along one of their short edges.

**3.** A terminal according to claim 2, characterized in that the two parts (110, 120) of the case are hinged to each other about a hinged connection (122) comprising successive bearing journals (124) fixed in alternation to both of said parts and capable of rotating about a common shaft (125).

**4.** A terminal according to claim 3, characterized in that the hinged connection (122) is a snug fit enabling the terminal to be placed in an infinity of angular utilization positions lying in a predetermined range.

**5.** A terminal according to any one of claims 2 to 4, characterized in that the screen (128) and the camera optics (130) are disposed side-by-side in the region of the moving part that is situated furthest from said hinge (122).

**6.** A terminal according to claim 5, characterized in that the camera (132) is disposed flat inside said moving part (120), with its optics (130) including means (130b) for deflection through about 90°.

**7.** A terminal according to any one of claims 2 to 6, characterized in that manual control members (114) are provided in the region of the fixed part (110) that is situated furthest from said hinge.

**8.** A terminal according to any one of claims 1 to 7, characterized in that it further includes auxiliary lighting means (140) located in the fixed part (110) of the case in the vicinity of the hinge (122) and providing generally upwardly directed illumination.

**9.** A terminal according to claim 8, characterized in that the auxiliary lighting means include a flap (126) hinged about said hinge axis (A) between the two parts of the case.

**10.** A terminal according to claim 8 or 9, characterized in that it further includes a polarizer (152) disposed at the outlet from the auxiliary lighting means and a screen (154) disposed at the inlet to the camera optics (130).

**11.** A terminal according to any one of claims 1 to 10, wherein, in the utilization position, the camera optics (130) is offset laterally relative to the display screen (128), and characterized in that it further includes parallax correction means.

**12.** A terminal according to claim 11, characterized in that the parallax correction means comprise a camera lens (130a') disposed in such a manner that the aiming direction (B') of the camera is laterally inclined by a predetermined angle ($\beta$), with the sensitive plane (132a) of said camera being inclined by approximately the same angle ($\beta$) relative to the plane perpendicular to said aiming direction (B').

**13.** A terminal according to any one of claims 1 to 12, characterized in that it further includes means for giving assistance in positioning the moving part (120) of the case into the appropriate angular position for utilization.

**14.** A terminal according to claim 13, characterized in that the means for giving assistance in positioning comprise a mirror (150) disposed at the inlet to the camera optics (130) or in the vicinity thereof.

**15.** A terminal according to claim 13, characterized in that the means for giving assistance in positioning are constituted by the screen (128), which is a screen having a small observation cone.

**16.** A terminal according to claim 1, characterized in that it includes a motor for driving the moving part of the case relative to the fixed part.

**Patentansprüche**

**1.** Endgerät für audiovisuelle Kommunikation von der Art, wie es insbesondere mit einer Fernsprechstelle verbunden ist und in einem Gehäuse (100) einen Monitor als Bildwiedergabeeinheit (128), eine mit einer Optik (130) versehene Kamera (132), eine elektronische Anordnung (134) zur Steuerung, zur Codierung/Decodierung und zur Verknüpfung mit einer Übertragungsleitung sowie Kontrollmittel (114) umfaßt und bei dem das Gehäuse (100) einen ersten Teil (110), mit dem das Endgerät auf einer Trägerfläche ruht, sowie einen an dem ersten Teil um eine im wesentlichen horizontale Achse (A) schwenkbar gelagerten zweiten Teil (120) umfaßt, welch letzterer die Kamera (132) und ihre Optik (130) sowie den Monitor (128) aufnimmt, dadurch gekennzeichnet, daß beim Gebrauch der zweite Teil (120) des Gehäuses in der Lage ist, zumindest zwei unterschiedliche Winkelpositionen gegenüber dem ersten Teil (110) einzunehmen, welche zwei unterschiedlichen Blickrichtungen (B) der Kamera entsprechen.

2. Endgerät nach Anspruch 1, dadurch gekennzeichnet, daß die zwei Teile (110, 120) des Gehäuses allgemein die Form von rechteckigen Platten besitzen und aneinander entlang ihren kurzen Kanten gelagert sind.

3. Endgerät nach Anspruch 2, dadurch gekennzeichnet, daß die zwei Teile (110, 120) des Gehäuses aneinander über eine Scharnierverbindung (122) gelagert sind, welche aufeinanderfolgende Scharniere (124) umfaßt, die abwechselnd mit den beiden Teilen fest verbunden sind und sich um eine gemeinsame Achse (125) zu drehen vermögen.

4. Endgerät nach Anspruch 3, dadurch gekennzeichnet, daß die Scharnierverbindung (122) eine weiche Reibung aufweist und es ermöglicht, das Endgerät in einer unbegrenzten Zahl von in einem vorgegebenen Intervall liegenden Winkelpositionen zum Gebrauch einzustellen.

5. Endgerät nach einem der Ansprüche 2 bis 4, dadurch gekennzeichnet, daß die Bildwiedergabeeinheit (128) und die Optik (130) der Kamera nebeneinander in demjenigen Bereich des beweglichen Teiles angeordnet sind, welcher dem genannten Scharnier (122) gegenüberliegt.

6. Endgerät nach Anspruch 5, dadurch gekennzeichnet, daß die Kamera (132) flach indem genannten beweglichen Teil (120) angeordnet ist, wobei ihre Optik (130) Mittel (130b) zur Bildumkehrung um etwa 90° aufweist.

7. Endgerät nach einem der Ansprüche 2 bis 6, dadurch gekennzeichnet, daß Organe zur manuellen Steuerung (114) in dem Bereich des feststehenden Teiles (110) vorgesehen sind, welcher dem genannten Scharnier gegenüberliegt.

8. Endgerät nach einem der Ansprüche 1 bis 7, dadurch gekennzeichnet, daß es zusätzlich in dem feststehenden Teil (110) des Gehäuses und in der Nähe des Scharniers (122) Mittel zur Zusatzbeleuchtung (140) aufweist, welche eine allgemein ansteigende Beleuchtungsrichtung aufweisen.

9. Endgerät nach Anspruch 8, dadurch gekennzeichnet, daß die Mittel zur Zusatzbeleuchtung eine Verschlußklappe (126) umfassen, welche auf der genannten Scharnierachse (A) der beiden Gehäuseteile schwenkbar gelagert ist.

10. Endgerät nach Anspruch 8 oder 9, dadurch gekennzeichnet, daß es zusätzlich einen am Ausgang der Mittel zur Zusatzbeleuchtung angeordneten Polarisator (152) und einen am Eingang der Optik (130) der Kamera angeordneten Analysator (154) umfaßt.

11. Endgerät nach einem der Ansprüche 1 bis 10, bei welchem in der Gebrauchsposition die Optik (130) der Kamera (132) seitlich gegenüber der Bildwiedergabeeinheit (128) versetzt ist, dadurch gekennzeichnet, daß es zusätzlich Mittel zur parallaxen Korrektur umfaßt.

12. Endgerät nach Anspruch 11, dadurch gekennzeichnet, daß die Mittel zur parallaxen Korrektur ein Objektiv (130a) der Kamera (130) umfassen, welches derart angeordnet ist, daß die Blickrichtung (B') der Kamera seitlich um einen vorgegebenen Winkel ($\beta$) geneigt ist, wobei die empfindliche Ebene (132a) der genannten Kamera annähernd um den gleichen Winkel ($\beta$) gegenüber einer zur genannten Blickrichtung (B') senkrechten Ebene geneigt ist.

13. Endgerät nach einem der Ansprüche 1 bis 12, dadurch gekennzeichnet, daß es zusätzlich Hilfsmittel zur Positionierung des beweglichen Teiles (120) des Gehäuses in der passenden Gebrauchs-Winkelposition aufweist.

14. Endgerät nach Anspruch 13, dadurch gekennzeichnet, daß die Hilfsmittel zur Positionierung einen Spiegel (150) umfassen, der am Eingang oder in der Nachbarschaft der Optik (130) der Kamera (132) angeordnet ist.

15. Endgerät nach Anspruch 13, dadurch gekennzeichnet, daß die Hilfsmittel zur Positionierung durch die Bildwiedergabeeinheit (128) gebildet werden, welche ein konischer Bildschirm zur verkleinerten Betrachtung ist.

16. Endgerät nach Anspruch 1, dadurch gekennzeichnet, daß es einen Motor zum Antrieb des beweglichen Teiles gegenüber dem feststehenden Teil des Gehäuses aufweist.

FIG.1a

FIG.1b

FIG.2

FIG_3a

FIG_3b

FIG_4

FIG_5

EP 0 309 341 B1

FIG_6

FIG_7

12